# EUROPEAN PATENT APPLICATION

(11) **EP 2 166 787 A1**
(43) Date of publication of application: **24.03.2010**
(21) Application number: 09168320.1
(22) Date of filing: 20.08.2009
(51) Int. Cl.: H04W 4/06

(54) **Base station, mobile station, and transmission and reception method of broadcast information**

(30) Priority: 17.09.2008 JP 2008237952
(71) Applicant: FUJITSU LIMITED, Kawasaki-shi, Kanagawa 211-8588 (JP)
(72) Inventor: Nakagaki, Tatsuru, Kawasaki-shi, Kanagawa 211-8588 (JP); Tomita, Tetsuo, Kawasaki-shi, Kanagawa 211-8588 (JP)
(74) Representative: Stebbing, Timothy Charles

(57) **Abstract**

A base station (20) that performs radio transmission and reception with a mobile station (10) includes an update time management section that manages update time of broadcast information to be broadcasted, and a broadcast information transmission section that broadcasts the broadcast information including update time information of the broadcast information by using a broadcasting channel.

## Description

This application is based upon and claims the benefit of priority of the prior Japanese Patent Application No. 2008-237952, filed on September 17, 2008.

The present invention relates to a mobile station, a base station which performs radio transmission and reception with the mobile station, and a radio transmission and reception method of broadcast information.

In recent years, in addition to a standard speech communication function, an electronic mail transmission and reception function, and the like, a mobile station such as a portable telephone may include such functions as a camera function for photographing an object, a browser function for browsing a web site, a television function for viewing a television program, and a download function in which a music, a video, or the like, is downloaded and sound/video recorded so as to be reproduced at desired time. The mobile station is not only used as means for performing communication, but also used, by persons of a wide age range, as a multi-function terminal for their own personal use instead of a digital camera, a personal computer, a television, and a music/video reproducing apparatus.

In the mobile station, the speech communication function, the electronic mail transmission and reception function, the browser function, the download function, and the like, as described above, may be realized by performing radio communication with a base station. Usually, from each of a plurality of base stations located away from each other, identification information for identifying each of the base stations is broadcast at a certain time by using a pilot channel. The mobile station receives the identification information transmitted from each of the plurality of base stations, and selects the base station in which the radio wave intensity of the identification information is high, so as to transmit a registration request to the selected base station. The base station registers the mobile station from which the registration request is transmitted, and transmits, to each of the registered mobile stations, paging data indicating the presence or absence of a call request, at every certain time by using a paging channel. Further, the base station transmits and receives user data by using a data channel each time a data transmission and reception request is generated.

Further, the base station broadcasts, by using a broadcasting channel, broadcast information including report information, such as an additional installation of a new base station, specification information relating to the reception timing and the reading method of information transmitted from the base station, and the like (see, for example, Japanese Laid-open Patent Publication No. 2000-252912 and Japanese Laid-open Patent Publication No. 2002-247650). Further, in recent years, base stations have also had the ability to broadcast an emergency message, such as an emergency earthquake flash, by adding the message to the broadcast information (see, for example, Japanese Laid-open Patent Publication No. 10-42365).

In the mobile station, power consumption is increased in association with the multi-functioning of the mobile station, while there is also a strong demand to extend the battery duration. However, the problem is that the battery duration is reduced because, even when the mobile station is not used by the user, and where the power source is only turned on, a significant amount of electric power is consumed when the mobile station is allowed to periodically receive information from each of the base stations. The information may include, but is not limited to, information including the identification information transmitted by using the pilot channel, the paging data transmitted by using the paging channel, and the broadcast information transmitted by using the broadcasting channel, and the mobile station checks each of these types of information.

In relation to this problem, each of the base stations transmits the paging data that is periodically received and checked by the mobile station.
This occurs after adding, to the paging data, update information which is a message indicating that the broadcast information is updated. Each of the mobile stations checks the update notice of the broadcast information, which is added to the paging data, and receives the broadcast information transmitted by using the broadcasting channel only when the broadcast information is updated.

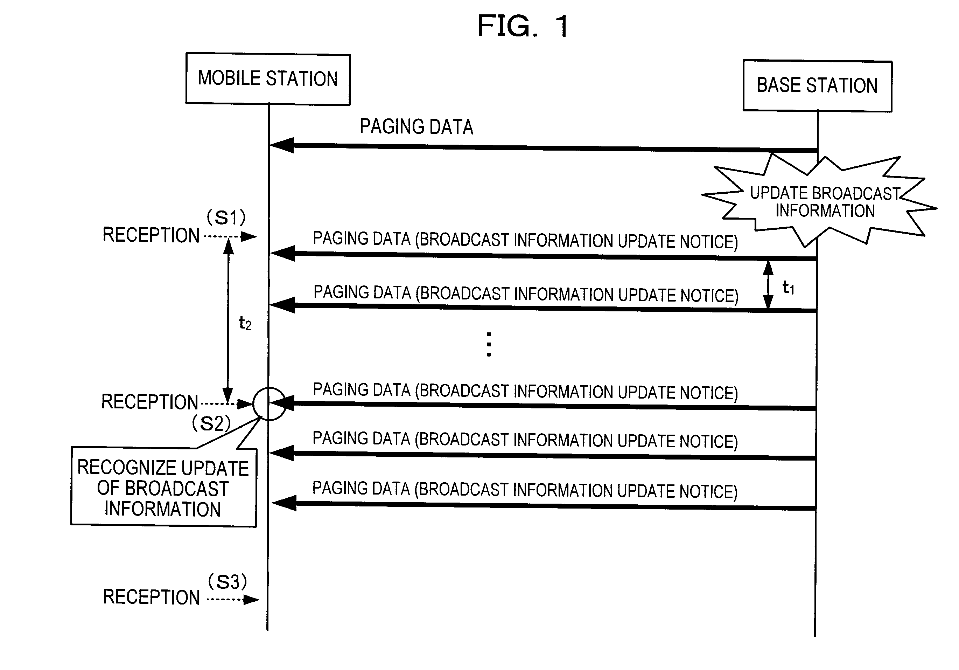

FIG. 1 is a figure illustrating a sequence in which the mobile station receives the paging data transmitted from the base station.

At every relatively short time period 't1', the base station transmits paging data indicating the presence or absence of a call request, and the like, to each of the registered mobile stations. Further, for example, when the broadcast information is updated due to installation of a new base station, the base station transmits the update notice of the broadcast information together with the paging data.

At every relatively long time period 't2', each of the mobile stations receives the paging data transmitted from the base station. Further, when the update notice of the broadcast information is added to the paging data, the mobile station receives the broadcast information broadcast from the base station.

Here, there is a problem when the update notice of the broadcast information is not added to the paging data received by the mobile station, as illustrated in FIG. 1. Specifically, when the update notice of the broadcast information is not added to the paging data received by the mobile station at a time 'S1', and where the update notice of the broadcast information is added to the paging data transmitted after the time 'S1', a time lag is caused. The time lag is at most about 't2' from the time when the update notice is transmitted by the base station to the time 'S2', when the update notice is received by the mobile station side. In order to solve this problem, the time interval 't2' at which the paging data is received by the mobile station may be shortened. However, in this case, the problem is that the power consumption of the mobile station is increased.

According to one aspect of the present invention, the time period from the time when the broadcast information is transmitted by the base station to the time when the broadcast information is received by each of the mobile stations is shortened. Further, the power consumption of the mobile station may be reduced according to another aspect of the present invention.

According to an aspect of the invention, a base station that performs radio transmission and reception with a mobile station includes an update time management section which manages an update time (timing or time interval) of broadcast information to be broadcasted. Also included is a broadcast information transmission section that broadcasts the broadcast information, including update time information providing an indication of the update timing or time interval of the broadcast information, by using a broadcasting channel.

According to another aspect of the present invention, a mobile station that performs radio transmission and reception with a base station includes a user data transmission and reception section that transmits and receives user data to and from the base station by using a data channel. Additionally, a broadcast information reception section is included to receive broadcast information that is transmitted from the base station by using a broadcasting channel. The reception section also includes update time information of the broadcast information, and an update time management section manages the update time information included in the broadcast information received by the broadcast information reception section. The broadcast information reception section also receives the broadcast information at a certain time based on the update time information.

According to yet another aspect, the present invention includes a transmission and reception method of broadcasting information in a radio communication system. The method includes a base station and a mobile station that preferably manage update time of broadcast information to be broadcast. The broadcast information includes update time information of the broadcast information. The method also includes receiving the broadcast information that is transmitted from the base station, where the information includes the update time information of the broadcast information. The update time information included in the received broadcast information is also managed, and the broadcast information is received at a certain time based on the update time information, by the mobile station.
Reference is made, by way of example only, to the accompanying drawings in which:

FIG. 1 is a drawing illustrating an example of a sequence in which paging data transmitted from a base station is received by a mobile station;

FIG. 2 illustrates an example of a configuration of a communication system including a mobile station and base stations;

FIG. 3 illustrates an example of an external perspective illustration of a mobile station according to one aspect of the present invention;

FIG. 4 illustrates an example of a hardware configuration of the mobile station according to one aspect of the present invention;

FIG. 5 illustrates an example of a configuration of the long distance communication device illustrated in FIG. 4;

FIG. 6 illustrates a configuration example of a signal processing section according to one embodiment of the present invention;

FIG. 7 illustrates a configuration example of a base station according to one embodiment of the present invention;

FIG. 8 illustrates an example of a data configuration of broadcast information according to one aspect of the present invention;

FIG. 9 is an example of a sequence diagram illustrating reception timings of the broadcast information in the mobile station according to one aspect of the present invention;

FIG. 10 is an example of a sequence diagram illustrating reception timings of the broadcast information transmitted from each of the plurality of base stations according to one embodiment of the present invention;

FIG. 11 is an example of a sequence diagram illustrating reception timings of broadcast information in a second embodiment of the present invention; and

FIG. 12 is an exemplary sequence diagram illustrating reception timings of broadcast information in a third embodiment of the present invention.

In the following, embodiments according to the present invention will be described with reference to the accompanying drawings.

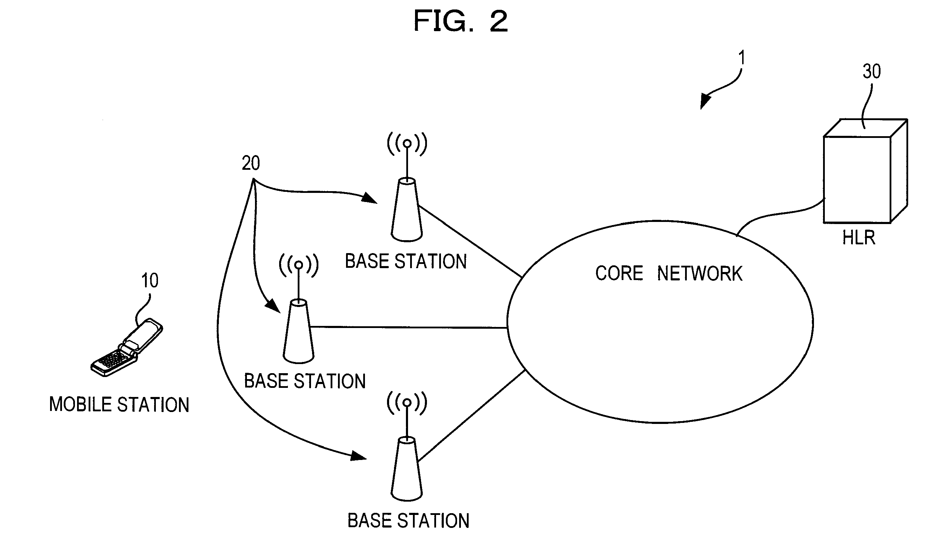

FIG. 2 illustrates a configuration example of a communication system including a mobile station and base stations according to one aspect of the present invention.

In one embodiment, the communication system 1 includes a mobile station 10 and a home location register 30 in which the user information, such as the telephone number of the mobile station 10 under communication contract, and the name and address of a user, is registered. Also included are a plurality of base stations 20 that perform radio communication with the mobile stations 10, and the like. Note that, in practice, any number of the mobile stations 10, a number of the base stations 20, and a number of the home location registers 30 may be included in the communication system 1. Also, a fixed telephone network, a web server, a mail server, and the like, may be operatively connected to each other in the communication system 1, but these are not illustrated here.

The base station 20 preferably broadcasts identification information for identifying each of the base stations 20 at a predetermined timing by using a pilot channel. Further, the base station 20 broadcasts, by using a broadcasting channel, broadcast information including a notice of additional installation of a new base station 20, a specification relating to reception timing and reading method of various information transmitted from each of the base stations 20, and the like.

The mobile station 10 receives the identification information transmitted from each of the base stations 20 at every certain timing.
Moreover, the mobile station 10 selects one of the base stations 20 according to factors such as the radio wave intensity of the identification information.
Further, when selecting one of the base stations 20, the mobile station 10 transmits, to the selected base station 20, a registration request which includes identification information, such as the telephone number of the mobile station 10, and which requests the location registration of the mobile station 10.

When receiving the registration request transmitted from the mobile station 10, the base station 20 transmits, to the home location register 30, an authentication inquiry about whether or not the mobile station 10 is under contract.

The home location register 30 may then perform authentication by retrieving identification information substantially identical with the identification information of the mobile station 10 from the registered user information. It is desirable for the home location register 30 to transmit the authentication result to the base station 20. The base station 20 preferably performs the location registration of the mobile station 10.

Further, the base station 20 may transmit paging data indicating the presence or absence of a call request to the location-registered mobile station 10 at every certain timing by using a paging channel. The mobile station 10 receives the paging data at every certain timing.

Further, when a transmission and reception request of user data is issued, the user data may be transmitted and received between the base station 20 and the mobile station 10 by using a data channel. For example, when speech communication is performed by the mobile station 10, the mobile station 10 receives the paging data indicating the presence of the call request, so as to perform the call processing. Then, when a user takes the telephone call, the mobile station 10 transmits a response signal to the base station 20 in response to the call request. Once the base station 20 receives the response signal, it transmits the response signal to the base station 20 in which the destination mobile station is registered. Further, when the response signal is transmitted to the destination mobile station 10 by the base station 20, the speech communication between the mobile stations is enabled, so that transmission and reception of voice sound data are started by using the data channel.

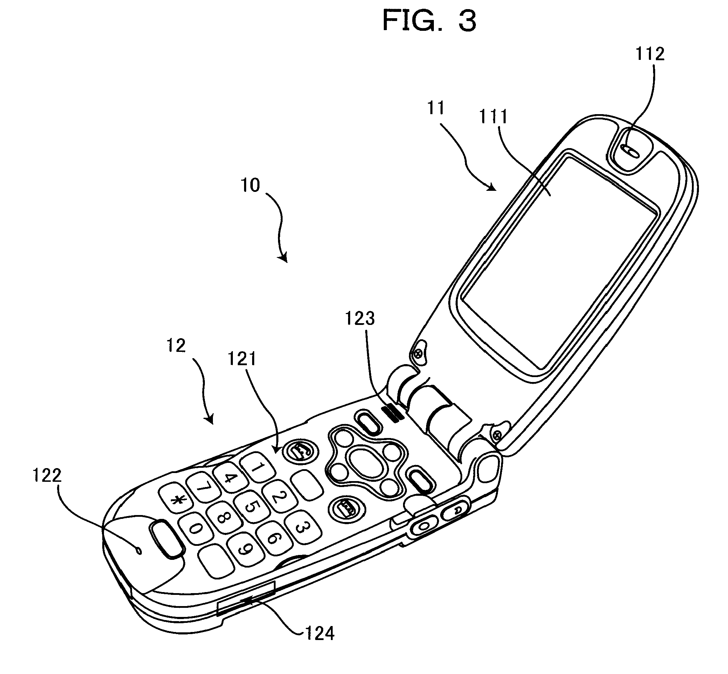

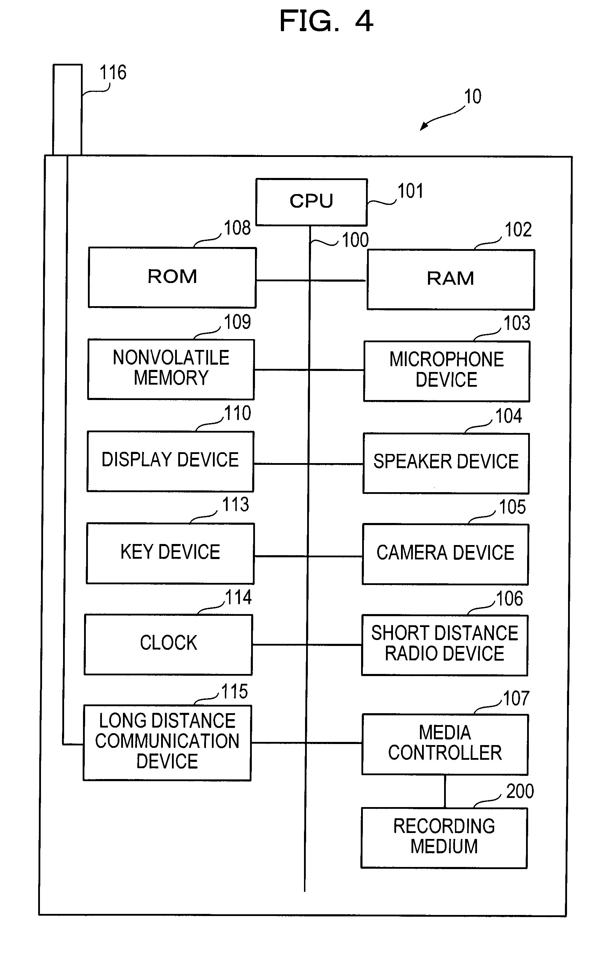

FIG. 3 illustrates one example of an external perspective illustration of the mobile station 10 according to one aspect of the present invention. FIG. 4 illustrates an example of a hardware configuration of the mobile station 10 according to one embodiment of the present invention.

As illustrated in FIG. 3, the mobile station 10 includes, for example, an upper case 11 and a lower case 12 which are opened and closed relative to each other. In the upper case 11, a LCD 111 is provided for image display, and a transmitting port 112 in which a small loudspeaker is arranged such that it can be positioned in or near an ear to hear the voice sound.

In the lower case 12, various operation keys 121 are provided to be operated by the user in order to make a phone call and transmit an electronic mail message by using the mobile station 10, and which are used to perform various settings. Also included is a receiving port 122 in which a microphone for picking up the user's voice is incorporated and which guides the voice to the microphone. A sound emitting port 123 may optionally be included. The sound emitting port 123 may include a loudspeaker to output the voice sound of a level that can be heard without the sound emitting port being put to the ear. Finally, it is also desirable to include a loading port 124 in which a recording medium is loaded.

Further, FIG. 4 illustrates a CPU 101, a RAM 102, a microphone device 103, a speaker device 104, a camera device 105, a short distance radio device 106, a media controller 107, a ROM 108, a nonvolatile memory 109, a display device 110, a key device 113, a clock 114, a long distance communication device 115 and an antenna 116, all of which may be operatively connected with each other via a bus 100, except for the antenna 116.

According to one embodiment, the CPU 101 executes various programs to control the whole mobile station 10.

ROM 108 may store various programs executed by the CPU 101 and various constants used for the execution of the various programs. The CPU 101 executes the programs stored in the ROM 108 by using the RAM 102 as a work area.

Nonvolatile memory 109 stores various kinds of information, such as an address book, and received electronic mails, which may be rewritten.

The microphone device 103 includes a microphone to pick up the user's voice and performs processing of the voice picked up by the microphone.

The speaker device 104 includes a loudspeaker for outputting voice sound to the user, and generates a voice sound signal to drive the loudspeaker.

The short distance radio device 106 transmits information such as an image, a telephone number, and the like, to an external device at a short distance without having to transmit via the base station 20. In the present embodiment, the infrared communication is performed in the short distance radio device 106.

The camera device 105 collects image data obtained by photographing. The display device 110 displays images using the LCD 111 (see FIG. 3). The key device 113 detects user key operations of various operation keys 121 (see FIG. 3). The clock 114 acquires the present time.

The media controller 107 reads data from the recording medium 200 loaded in the loading port 124 illustrated in FIG. 3, or writes image data generated by the camera device 105 into the recording medium 200.

The long distance communication device 115 performs transmission and reception of sound data, electronic mail, and the like, by using the antenna 116. The long distance communication device 115 performs transmission and reception of data via the base station.

The following discussion describes the transmission and reception of various types of information between the mobile station 10 and the base station 20.

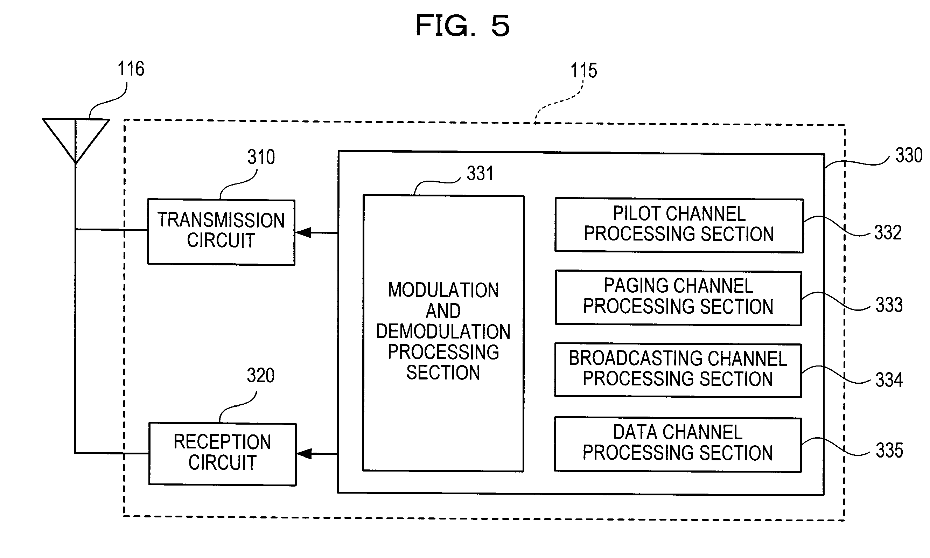

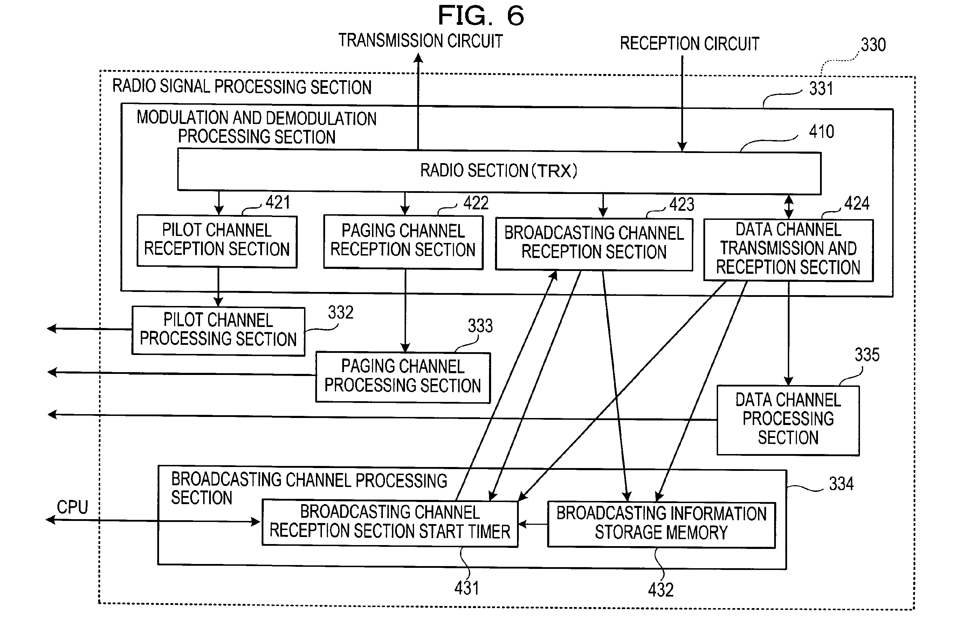

FIG. 5 illustrates a configuration example of the mobile station according to one aspect of the present invention. FIG. 6 illustrates a configuration example of a signal processing section 330 according to one aspect of the present invention.

As illustrated in FIG. 5, the long distance communication device 115 includes a transmission circuit 310 that transmits an analog radio wave signal via the antenna 116, a reception circuit 320 that receives an analog radio wave signal via the antenna 116, and the signal processing section 330 that performs signal amplification, and signal modulation and demodulation. Further, the signal processing section 330 includes a modulation and demodulation processing section 331 that performs signal modulation and demodulation, a pilot channel processing section 332 that controls reception of the identification information transmitted from each of the plurality of base stations 20, and that selects one of the base stations 20 on the basis of the radio wave intensity of the identification information transmitted from each of the plurality of base stations 20. Also included is a paging channel processing section 333 that controls reception of the paging data transmitted from each of the base stations 20, a broadcasting channel processing section 334 that controls reception of the broadcast information transmitted from each of the base stations 20, and a data channel processing section 335 that controls transmission and reception of user data transmitted from each of the base stations 20.

Further, as illustrated in FIG. 6, the modulation and demodulation processing section 331 includes a radio section 410 that demodulates an analog radio wave signal received by the reception circuit 320 to a digital signal, and modulates a digital signal to an analog radio wave signal so as to transmit the modulated signal to the transmission circuit 310. A pilot channel reception section 421 receives data (for example, identification information) transmitted from each of the base stations 20 by using the pilot channel, a paging channel reception section 422 that receives data (for example, paging data) transmitted from each of the base stations 20 by using the paging channel at every certain timing according to an instruction from the paging channel processing section 333. A broadcasting channel reception section 423 is included to receive data (for example, broadcast information) transmitted from each of the base stations 20 by using the broadcasting channel, and a data channel transmission and reception section 424 is included to transmit and receive data (for example, user data and broadcast information) transmitted from each of the base stations 20 by using the data channel. The broadcasting channel processing section 334 includes a broadcasting channel reception section start timer 431 that measures a timing of receiving the broadcast information according to an instruction from the CPU 101, and a broadcast information storage memory 432 that stores the broadcast information, and the like. The combination of the data channel processing section 335 and the data channel transmission and reception section 424 corresponds to an example of a second user data transmission and reception section in the mobile station. The combination of the broadcasting channel processing section 334, the broadcasting channel reception section 423, and the data channel transmission and reception section 424 corresponds to an example of a broadcast information reception section in the mobile station. Further, the combination of the broadcasting channel reception section start timer 431 and the CPU 101 corresponds to an example of an update time management section in the mobile station.

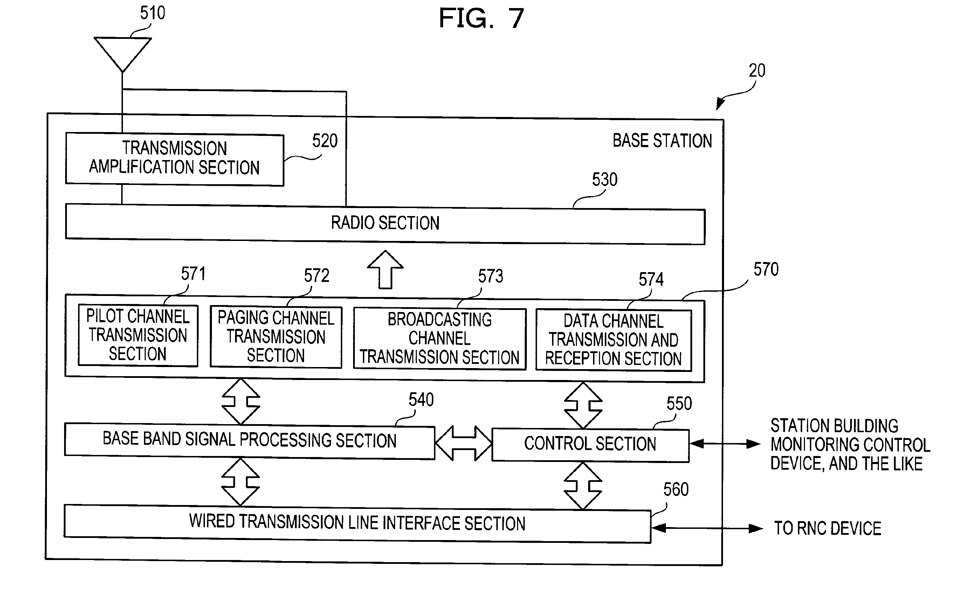

FIG. 7 illustrates a configuration example of the base station 20 according to one aspect of the present invention.

The base station 20 includes a wired transmission line interface section 560 that serves as an interface of data communication with a RNC device (radio network control device) that is one of host devices and is not illustrated, a control section 550 that controls the whole base station 20, a base band signal processing section 540 that performs signal processing to the digital data before the modulation and after the demodulation, and a data transmission and reception section 570 that transmits and receives data by using each of the channels. Also included is a radio section 530 that performs modulation and demodulation of data, a transmission amplification section 520 that amplifies a transmission signal, and an antenna 510. Further, the data transmission and reception section 570 includes a pilot channel transmission section 571 that broadcasts data (for example, identification information) at every certain time by using the pilot channel, a paging channel transmission section 572 that transmits data (for example, paging data) to each of the mobile stations 10 at a certain time by using the paging channel, a broadcasting channel transmission section 573 which broadcasts data (for example, broadcast information) at every certain time by using the broadcasting channel, and a data channel transmission and reception section 574 which transmits and receives data (for example, user data and broadcast information) to and from each of the mobile stations 10 by using the data channel. The control section 550 corresponds to an example of an update time management section in the above described base station. The combination of the control section 550 and the data channel transmission and reception section 574 corresponds to an example of a first user data transmission and reception section in the above described base station. The combination of the control section 550, the broadcasting channel transmission section 573, and the data channel transmission and reception section corresponds to an example of a broadcast information transmission section in the base station.

Each of the base stations 20 broadcasts, at every certain time (namely, at each of a sequence of predetermined timings or after every elapse of a predetermined time interval), the identification information by using the pilot channel. The base stations 20 also transmit the paging data to each of the mobile stations 10 by using the paging channel, and broadcasts the broadcast information by using the broadcasting channel. Additionally, when a user data transmission and reception request is generated, each of the base stations 20 transmits and receives the user data to and from each of the mobile stations 10. However, when all of the identification information, the paging data, and the broadcast information are to be received in each of the mobile stations 10 at every certain time, the power consumption of the mobile station 10 is increased. In the present embodiment, an indication of the update time (e.g. timing) when the next broadcast information is to be updated is included in the broadcast information broadcast from the base station 20. Thus, in each of the mobile stations 10, when the broadcast information is once received, the reception of the broadcast information is stopped until the next update time. The update time may be indicated indirectly, e.g. by a number of system clocks.

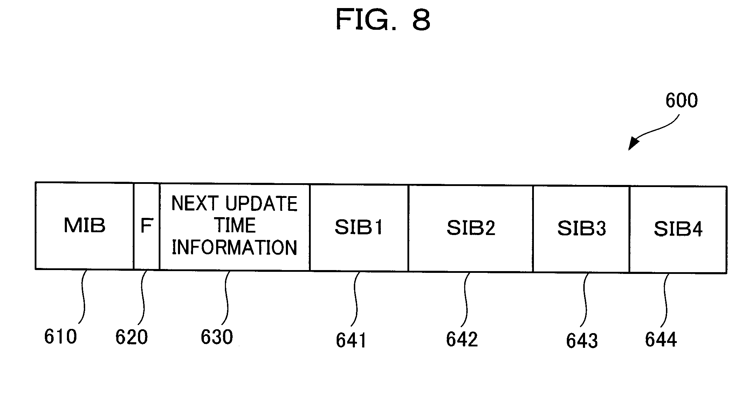

FIG. 8 is a figure illustrating an example of a data configuration of the broadcast information according to one embodiment of the present invention.

As illustrated in FIG. 8, the broadcast information 600 includes a MIB (Master Information Block) 610 indicating a network standard, and the like. A flag 620 is also included to indicate whether or not the broadcast information 600 corresponds to a new data configuration with update time information added thereto, the update time information 630 indicating the update schedule time of the next broadcast information, and SIBs (System Information Blocks) 641, 642, 643 and 644 indicating additional installation of a new base station, and specifications about the reception timing and reading method of various information.

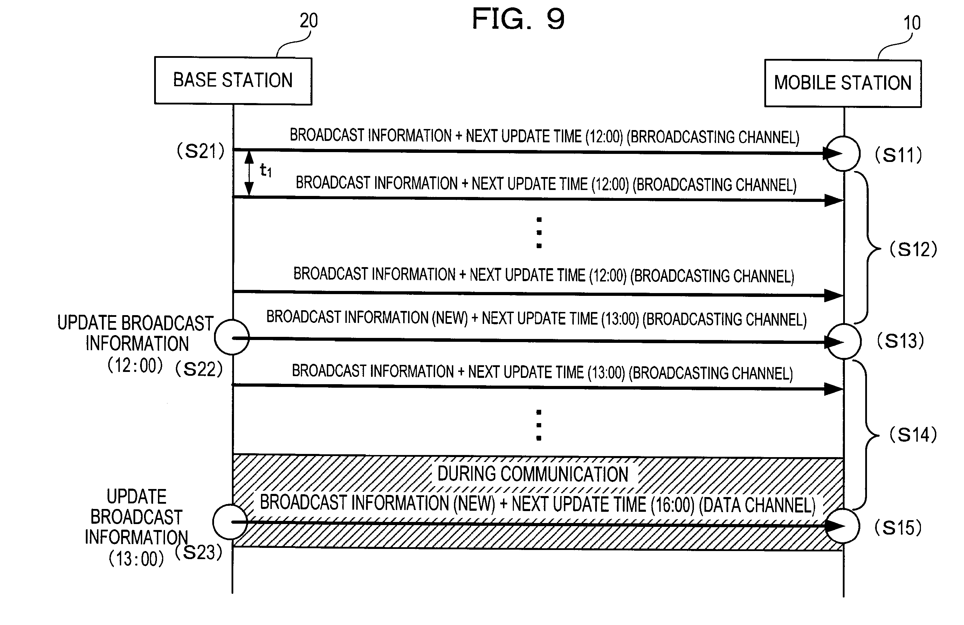

FIG. 9 illustrates one embodiment of a sequence diagram illustrating reception timings of the broadcast information in the mobile station 10.

According to the instruction from the control section 550, the broadcasting channel transmission section 573 of the base station 20 broadcasts the broadcast information 600 at every certain time 't1' by using the broadcasting channel (S21). As an example, the following description assumes that the base station 20 broadcasts the broadcast information 600 with the update time information 630 set at '12:00'.

According to the instruction from the broadcasting channel processing section 334, the broadcasting channel reception section 423 of the mobile station 10 receives the broadcast information 600 transmitted from the base station 20 by using the broadcasting channel (S11). The broadcast information 600 is sent to the broadcasting channel processing section 334, so as to be stored in the broadcast information storage memory 432, and to be sent to the CPU 101.

The CPU 101 acquires the update time information 630 in the broadcast information 600. The CPU 101 then starts the broadcasting channel reception section start timer 431, and stops the reception of the broadcast information in the broadcasting channel reception section 423 during a period until the update schedule time indicated by the acquired update time information 630 (S12). In this example, since the next update schedule time is set at '12:00', the reception of the broadcast information is stopped during a period until 12:00.

When the update schedule time comes, the broadcasting channel transmission section 573 of the base station 20 broadcasts the updated new broadcast information 600 by using the broadcasting channel (S22). In this example, the new broadcast information 600, in which the SIBs 641, 642, 643 and 644 in FIG. 8 are updated, and in which the update time information 630 is set at '13:00', is broadcast.

Further, when the update schedule time comes, the mobile station 10 transmits the reception instruction from the broadcasting channel reception section start timer 431 to the broadcasting channel reception section 423. The broadcasting channel reception section 423 receives the new broadcast information 600 (S13).

When the new broadcast information 600 is received by the mobile station 10, the broadcast information stored in the broadcast information storage memory 432 is updated to the new broadcast information 600. Further, on the basis of the update time information 630 in the new broadcast information 600, the CPU 101 starts the broadcasting channel reception section start timer 431, and stops the reception of the broadcast information in the broadcasting channel reception section 423 during a period until the next update schedule time.

In this way, in the base station 20, the broadcast information including the next update schedule time is broadcast, while in the mobile station 10, when the broadcast information is received, the reception of the broadcast information is stopped during the period until the update schedule time included in the received broadcast information. Thereby, it is possible to suppress the time lag between the time when the broadcast information is updated and the time when the broadcast information is acquired in the mobile station 10. Further, it is possible to reduce the power consumption of the mobile station 10.

Further, when the web function is used or speech communication is performed in the mobile station 10, the data channel transmission and reception section 574 of the base station 20 transmits the user data by using the data channel, and the data channel transmission and reception section 424 of the mobile station 10 receives the user data transmitted from the base station 20 by using the data channel.

When, while the mobile station 10 performs communication by using the data channel, the next update schedule time of the broadcast information comes, each of the base stations 20 broadcasts the new broadcast information by the broadcasting channel transmission section 573. Further, according to the instruction from the control section 550, the data channel transmission and reception section 570 of each of the base stations 20 adds the new broadcast information to the user data, and transmits the user data with the broadcast information added thereto to the mobile station 10 by using the data channel (S23).

The mobile station 10 receives the user data with the broadcast information added thereto in the data channel transmission and reception section 424 (S15). The received user data is sent to the data channel processing section 335, so as to be sent to the CPU 101, and is also sent to the broadcasting channel processing section 334.

In the broadcasting channel processing section 334, the new broadcast information added to the user data is stored in the broadcast information storage memory 432, and the broadcasting channel reception section start timer 431 is started by the CPU 101 on the basis of the update time information 630 in the new broadcast information.

The above described broadcast information transmission section that broadcasts the broadcast information by using the broadcasting channel, may also, in the case where the mobile station is in the period of transmission and reception of the user data at the time when the update time of the broadcast information comes, transmit the updated broadcast information to the mobile station by using the data channel that is used for the transmission and reception of the user data by the mobile station.

Further, the broadcast information reception section may also receive the broadcast information transmitted by using the data channel used for the transmission and reception of the user data, when the broadcast information is transmitted by using the data channel during the transmission and reception of the user data.

When the transmission and reception of the user data is performed at the time when the update time of the broadcast information comes, the user data, to which the new broadcast information is added in the base station, is then transmitted. In the mobile station, the broadcast information transmitted along with the user data by using the data channel is acquired, and thereby the power consumption of the mobile station can be efficiently reduced. Further, the updated broadcast information can be acquired on the side of the mobile station.

Moreover, in practice, the mobile station 10 receives various kinds of information broadcast from each of the plurality of base stations 20.

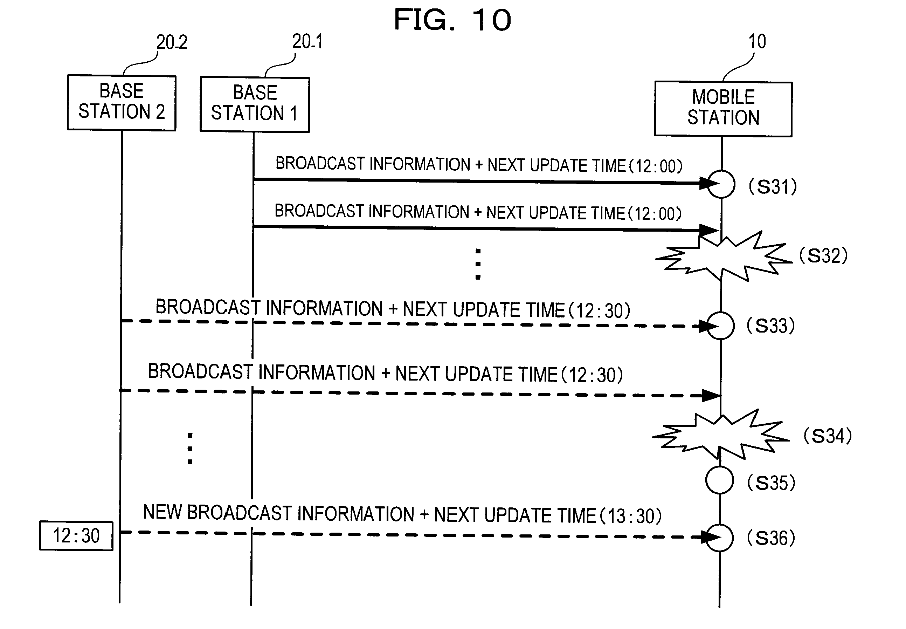

FIG. 10 is an example of a sequence diagram illustrating reception timings of the broadcast information transmitted from each of the plurality of base stations 20.

In each of the base stations 20_1 and 20_2, the identification information for identifying each of the base stations 20_1 and 20_2 is broadcast by the pilot channel transmission section 571 at every certain time by using the pilot channel.

In the mobile station 10, the identification information transmitted from each of the base stations 20_1 and 20_2 is received by the pilot channel reception section 421. In the pilot channel processing section 332, the base station 20 having a higher radio wave intensity is selected from the base stations 20_1 and 20_2. In this example, the description is provided under the assumption that the base station 20_1 is selected.

When the base station 20_1 is selected, a registration request is transmitted from the mobile station 10 to the base station 20_1, and hand-over processing with the base station 20_1 is performed.

The broadcasting channel reception section 423 of the mobile station 10 receives the broadcast information 600 transmitted from the base station 20_1 by using the broadcasting channel (S31), and stops reception of the next broadcast information during a period until the update schedule time indicated by the update time information 630 in the broadcast information 600. In this example, since the next update schedule time is set at '12:00', the reception of the broadcast information is stopped during the period until 12:00.

Before the next update schedule time comes, when the user moves while carrying the mobile station 10, and when the radio wave intensity of the identification information transmitted from base the station 20_2 is increased (S32), the pilot channel processing section 332 selects the base station 20_2, so that the hand-over processing with the base stations 20_2 is performed. At this time, according to the instruction from the CPU 101, the broadcasting channel reception section 423 receives the broadcast information 600 transmitted from the base station 20_2 by using the broadcasting channel (S33). Further, the acquired new broadcast information 600 is also stored in the broadcast information storage memory 432. Then, the CPU 101 starts the broadcasting channel reception section start timer 431 for the new base station 20_2 on the basis of the update time information 630 in the new broadcast information 600, and stops the reception of the next broadcast information during a period until the next update schedule time. In this example, since the next update schedule time is set at '12:30', the reception of the broadcast information is stopped during the period until 12:30.

In one aspect, when the radio wave intensity of the base station 20_1 selected at first is reduced (S34), processing to stop the handover with the base station 20_1 is performed according to the instruction from the CPU 101 (S35). Thereby, the broadcasting channel reception section start timer 431 for the base station 20_1 is reset, and the broadcast information of the base station 20_1 stored in the broadcast information storage memory 432 is erased.

When the update schedule time of the broadcast information transmitted from the newly selected base station 20_2 comes, the broadcasting channel reception section 423 receives the new broadcast information 600 transmitted from the base station 20_2 (S36).

The mobile station may also include an area movement detection section for detecting the movement of the mobile station from the first area covered by the first base station to the second area covered by the second base station. In addition, according to the detection of the movement to the second area, the broadcast information reception section may receive the broadcast information transmitted from the second base station without waiting for the arrival of the next update time of the broadcast information, which is managed in the update time management.

The mobile station detects the movement thereof from the first area to the second area and receives the broadcast information transmitted from the second base station without waiting for the next update time of the stored broadcast information. Thereby, the mobile station is able to acquire the new broadcast information for the new area. In this case, the pilot channel processing section 332 corresponds to an example of the area movement detection section.

As described above, according to the present embodiment, it is possible to reduce the time lag between the time when the broadcast information is updated and the time when the broadcast information is acquired by the mobile station. Further, it is possible to suppress the power consumption of the mobile station, and hence it is possible to improve the continuous duration. Further, even when the area of the mobile station is changed, the mobile station is able to acquire the broadcast information of the new area.

A second embodiment of the present invention is described herein. Those skilled in the art will understand that the description of the first and second embodiments are separate for illustrative purposes only. Accordingly, the features and/or structure of the first and second embodiments may be selectively combined as desired.

The second embodiment is different from the first embodiment with regard to the reception timing of the broadcast information in the mobile station during transmission and reception of user data. However, the second embodiment has the same configuration as that of the first embodiment, and hence only the differences between the two embodiments will be described herein.

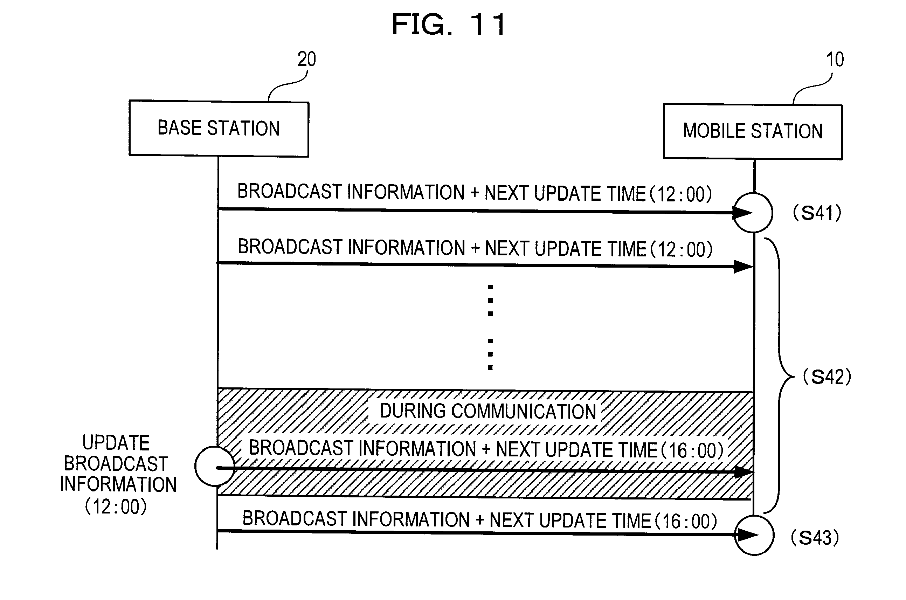

FIG. 11 is a sequence diagram illustrating the reception timing of the broadcast information in the second embodiment.

When the broadcasting channel transmission section 573 of the base station 20 broadcasts the broadcast information 600 by using the broadcasting channel, the broadcasting channel reception section 423 of the mobile station 10 receives the broadcast information 600 (S41). The broadcast information 600 is stored in the broadcast information storage memory 432, and also sent to the CPU 101.

On the basis of the update time information 630 in the broadcast information 600, the CPU 101 starts the broadcasting channel reception section start timer 431, and stops the reception of the broadcast information in the broadcasting channel reception section 423 during a period until the update schedule time indicated by the update time information 630 (S42). Since the next update schedule time is set at '12:00' in this example, the reception of the broadcast information is stopped the period until 12:00.

When a web function and a speech communication function are used by using the mobile station 10, the data channel transmission and reception section 570 of the base station 20 transmits user data by using the data channel, and the data channel transmission and reception section 424 of the mobile station 10 receives the user data transmitted from the base station 20 by using the data channel.

In the case where the next update schedule time of the broadcast information comes while the communication using the data channel is performed in the mobile station 10, the mobile station 10 is set in a standby state waiting for the reception of the broadcast information during a period until the transmission and reception of the user data by using the data channel are ended. After the transmission and reception of the user data are ended, the new broadcast information broadcasted by using the broadcasting channel is received by the broadcasting channel reception section 423 (S43).

When the next update time of the broadcast information comes during the period of the user data transmission and reception by the second user data transmission and reception section, the broadcast information reception section may wait for the end of the period of the user data transmission and reception by the second user data transmission and reception section, so as to receive the new broadcast information.

The reception of the new broadcast information is performed by the mobile station side after the end of the user data transmission and reception. Thereby, it is possible to suppress the change of the data transmission timing, and the like, on the base station side, and hence it is possible to efficiently use the present communication system.

As described above, also in the present embodiment, it is possible to eliminate the processing to periodically receive the broadcast information on the side of the mobile station 10. Thereby, it is possible to acquire the broadcast information while suppressing the power consumption in the mobile station 10.

A third embodiment will be described. The third embodiment is different from the first embodiment in the reception method of the broadcast information in the mobile station during user data transmission and reception. However, the third embodiment has the same configuration as that of the first embodiment, and hence there will be described only the difference from the first embodiment. As discussed above, the features and/or structure of the third embodiment may be selectively combined with any other embodiment described herein.

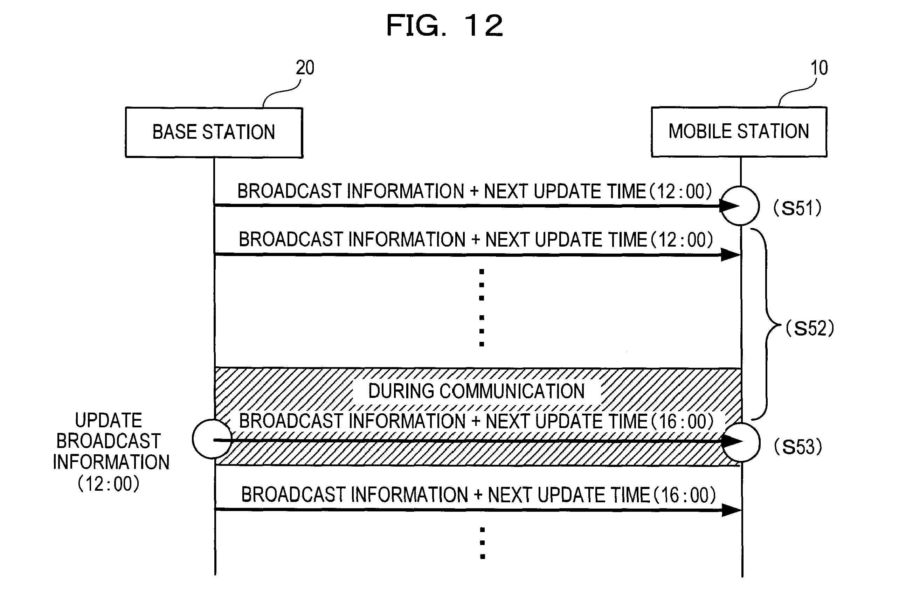

FIG. 12 is an example of one embodiment of a sequence diagram illustrating the reception timing of the broadcast information in the third embodiment.

The broadcasting channel reception section 423 of the mobile station 10 receives the broadcast information 600 broadcast from the base station 20 by using the broadcasting channel (S51). The broadcast information 600 is stored in the broadcast information storage memory 432 and also sent to the CPU 101.

When the broadcast information 600 is acquired, the CPU 101 starts the broadcasting channel reception section start timer 431, and stops the reception of the broadcast information in the broadcasting channel reception section 423 during a period until the update schedule time indicated by the update time information 630 in the broadcast information 600 (S52).

When the next update schedule time of the broadcast information comes while the user data transmission and reception by using the data channel is performed in the mobile station 10, the new broadcast information broadcast by using the broadcasting channel is received in the broadcasting channel reception section 423 of the mobile station 10 while the user data transmission and reception by using the data channel are continued by the data channel transmission and reception section 424 (S53).

Even when the next update time of the broadcast information comes during the period of user data transmission and reception by the second user data transmission and reception section, the broadcast information reception section may receive the new broadcast information in parallel with the user data transmission and reception by the second user data transmission and reception section.

The mobile station, which is operable to perform data reception by using the broadcasting channel in parallel with data transmission and reception by using the data channel, is operable to receive the broadcast information even during user data transmission and reception. Thereby, it is possible to reduce the time period between the time when the broadcast information is updated and the time when the updated broadcast information is acquired by the mobile station.

In the above, the portable telephone is illustrated as an example of the above described mobile station. However, the mobile station may comprise any portable data device including, but not limited to, a PDA (Personal Digital Assistant), a portable game machine, and the like.

## Claims

1. A base station operable to perform radio transmission and reception with a mobile station, the base station comprising:
an update time management section for managing update time of broadcast information to be broadcast; and
a broadcast information transmission section arranged to broadcast the broadcast information including update time information of the broadcast information by using a broadcasting channel.

2. The base station according to claim 1, further comprising a user data transmission and reception section arranged to transmit and receive user data to and from the mobile station by using a data channel,
wherein the broadcast information transmission section is configured to broadcast the broadcast information by using the broadcasting channel, and configured, when the update time of the broadcast information comes, to transmit the updated broadcast information by using the data channel to the mobile station which is in the user data transmission and reception period.

3. A mobile station operable to perform radio transmission and reception with a base station, the mobile station comprising:
a user data transmission and reception section arranged to transmit and receive user data to and from the base station by using a data channel;
a broadcast information reception section arranged to receive broadcast information that is transmitted from the base station by using a broadcasting channel and that includes update time information of the broadcast information; and
an update time management section for managing the update time information included in the broadcast information received by the broadcast information reception section,
wherein the broadcast information reception section is arranged to receive the broadcast information at a certain time based on the update time information.

4. The mobile station according to claim 3, wherein when the update time of the broadcast information comes during the period of the user data transmission and reception by the user data transmission and reception section, the broadcast information reception section performs the reception of the updated broadcast information in parallel with the user data transmission and reception.

5. The mobile station according to claim 3, wherein when during the user data transmission and reception period, the broadcast information is transmitted by using the data channel that is used for the user data transmission and reception, the broadcast information reception section receives the broadcast information transmitted by using the data channel.

6. The mobile station according to claim 3, further comprising an area movement detection section for detecting movement of the mobile station from the area of the base station in which area the mobile station is located to the area of the other base station,
wherein when the movement to the area of the other base station is detected, the broadcast information reception section receives the broadcast information transmitted from the other base station without waiting for arrival of the update time of the broadcast information, which update time is managed by the update time management section.

7. Software which, when executed by a processor in wireless transceiver equipment, cases the equipment to provide the base station or the mobile station according to any of claims 1 to 6.

8. A transmission and reception method of broadcast information in a radio communication system including a base station and a mobile station, the transmission and reception method comprising:
managing an update time of broadcast information to be broadcasted, and broadcasting the broadcast information including update time information of the broadcast information, by the base station; and
receiving the broadcast information that is transmitted from the base station and that includes the update time information of the broadcast information, managing the update time information included in the received broadcast information, and receiving the broadcast information at a certain time based on the update time information, by the mobile station.
